# FASCICULE DE BREVET EUROPEEN

(11) **EP 3 389 921 B1**
(45) Date de publication et mention de la délivrance du brevet: **18.09.2019**
(21) Numéro de dépôt: 16819335.7
(22) Date de dépôt: 22.11.2016
(51) Int. Cl.: B23P 19/04, B25J 15/00, B23P 21/00, B25J 13/08, B25J 15/06

(54) **POSTE D'ASSEMBLAGE D'UNE LIGNE DE FABRICATION INDUSTRIELLE**
MONTAGESTATION EINER INDUSTRIELLEN FERTIGUNGSSTRASSE
ASSEMBLY STATION OF AN INDUSTRIAL PRODUCTION LINE

(30) Priorité: 17.12.2015 FR 1562633
(43) Date de publication de la demande: 24.10.2018
(73) Titulaire: PSA AUTOMOBILES S.A., 78300 Poissy (FR)
(72) Inventeur: DURVILLE, Laurent, 78350 Jouy en Josas (FR); AUFSATZ, Camille, 78150 Le Chesnay (FR); GRANGER, Simon, 91680 Bruyeres Le Chatel (FR); GILLES, Frederic, 94350 Villiers sur Marne (FR)
(86) Numéro de dépôt international: PCT/FR2016/053042
(87) Numéro de publication internationale: WO 2017/103364

(56) Documents cités:
- EP-A1- 0 646 440
- EP-A2- 0 821 549
- WO-A1-2009/071567
- GB-A- 1 461 432
- JP-A- H0 557 656
- JP-A- 2003 258 495
- US-A- 4 845 821
- US-A- 5 289 634
- US-A1- 2010 139 072
- US-A1- 2010 191 372
- US-A1- 2014 288 690

## Description

L'invention concerne un poste d'assemblage d'une ligne de fabrication industrielle selon le préambule de la revendication 1. L'invention concerne aussi un procédé de mise en oeuvre d'un tel poste d'assemblage et un procédé de fonctionnement d'une ligne de fabrication industrielle comprenant un tel poste d'assemblage.

Elle s'intéresse à l'assemblage de pièces mécaniques, notamment - mais pas uniquement - dans le domaine des groupes motopropulseurs, par exemple pour équiper des véhicules, de type automobile.

Le document EP 0 821 549 A2 décrit un poste d'assemblage selon le préambule de la revendication 1.

Actuellement, les lignes d'assemblage pour des produits manufacturés sont généralement constituées d'une succession de stations d'assemblage manuelles ou automatiques. Les stations d'assemblage de type automatiques utilisent des machines spéciales, dédiées, étudiées spécifiquement pour un type de produit donné (on comprend par « type de produit » une famille de produits et ses variantes), et pour une capacité de production donnée.

Le principe de conception de telles machines repose sur la combinaison d'outils spécifiques à chaque opération (comme des visseuses, des préhenseurs, des pinces....). Il en résulte des machines complexes, monobloc, peu adaptées à d'autres familles de produit, relativement difficiles à modifier et reconfigurer. Ce sont les spécificités de chaque machine qui structurent le procédé d'assemblage dans son ensemble, ce qui explique que le temps de conception de chaque ligne de fabrication soit long : A chaque nouvelle référence de produit à fabriquer, à chaque évolution du produit, il faut reprendre la conception des outils.

En outre, à chaque augmentation de cadence de production, pour un produit à assembler donné, il faut ajouter des outillages sur la ligne de fabrication existante, ce qui oblige à augmenter la taille de la ligne, à la reconfigurer, ce qui a un impact important sur son implantation dans le site de production, pouvant par ailleurs comprendre plusieurs lignes de fabrication. Ce redimensionnement de la ligne peut aussi impacter l'ordre des opérations à effectuer, et sur les distances induites entre les postes d'assemblage à manipulation manuelle, pouvant conduire à regrouper dans des zones contiguës les postes avec intervention d'opérateurs pour leur éviter des déplacements trop importants.

L'invention a alors pour but de concevoir de nouveaux postes d'assemblage pour équiper des lignes de production qui soient plus flexibles, notamment en termes de type de produit fabriqué et en termes de variation de cadences de production. Elle a notamment pour but de remédier aux inconvénients précités.

L'invention a tout d'abord pour objet un poste d'assemblage d'une ligne de fabrication industrielle pour monter une pluralité de composants sur une pièce, tel que ledit poste comprend au moins un module à fonctionnement automatique équipé d'un moyen robotique, notamment de type collaboratif, assurant la préhension simultanée de la pluralité des composants, puis le montage un à un desdits composants sur la pièce.

De préférence, le module à fonctionnement automatique comprend des moyens de pilotage du moyen robotique sur 3, et de préférence 6 degrés de liberté. Avec un moyen robotique aussi agile, on peut aisément reprogrammer le moyen robotique selon le produit à assembler.

Selon un mode de réalisation, la pièce est une culasse de moteur, et les composants sont les soupapes de ladite culasse. Dans le texte de la présente demande, on pourra donner des explications et détailler les avantages de l'invention sur la base de ce mode de réalisation, par soucis de simplicité, mais l'invention s'applique à tout assemblage de pièces ou composants, notamment de pièces mécaniques entre elles.

Actuellement, il existe deux procédés pour introduire les soupapes dans la culasse d'un moteur thermique : un procédé de type manuel (avec exécution de la tâche par un opérateur), et un procédé de type automatique (avec utilisation de robots gros porteurs).

Avec le procédé de type manuel, l'opérateur introduit les soupapes directement à la main de façon unitaire. Le procédé de type manuel est adapté à des ateliers de relativement faible capacité (200 à 320 000 unités par an). L'opérateur a besoin d'approximativement une minute pour introduire toutes les soupapes dans la culasse.

Avec le procédé de type automatique, le robot, muni d'un préhenseur, introduit toutes les soupapes d'une même rangée en simultané. Le procédé de type automatique est en mesure d'assurer une forte capacité de production (320 000 à 640 000 unités par an).

Les deux procédés ne sont pas interchangeables aisément. Faire évoluer la capacité de production de la ligne d'assemblage au cours de la vie du produit est délicat à gérer. En effet, les postes automatiques, et notamment, si on poursuit avec l'exemple des soupapes à monter dans une culasse, les postes automatiques d'introduction des soupapes, sont des postes complexes, qui nécessitent des investissements importants, et dont les rendements peuvent fluctuer, notamment selon la qualité des conditionnements des soupapes ou des variabilités dimensionnelles des soupapes ou de la culasse. Afin de rendre l'opération d'introduction réalisable par le robot, il est préférable que la culasse soit d'abord recentrée au préalable sur son moyen de convoyage. Il peut aussi être nécessaire de prévoir des éléments mécaniques de recentrage sur le préhenseur. La complexité de l'ensemble des moyens automatiques, et notamment du préhenseur, ne permet pas une grand flexibilité aux différents produits : le poste et le préhenseur ne sont pas capables d'effectuer une opération donnée sur différents types de culasses.

L'invention a consisté à introduire les composants (les soupapes dans l'exemple) de manière unitaire, un par un donc, sur la pièce (la culasse dans l'exemple) à l'aide d'un robot dit collaboratif . On comprend par robot collaboratif un robot qui est apte à faire des opérations à proximité immédiate d'opérateurs, qui n'est donc plus du type des robots de grande dimension disposés dans les cages pour protéger les opérateurs. Ces robots collaboratifs sont de plus petite dimensions, et sont équipés de tous les moyens de sécurité suffisants, du type capteurs pour éviter le contact avec des opérateurs. Ils sont commercialisés, par exemple, par la société KUKA sous la référence IIWA.

Ces robots collaboratifs sont capables, notamment, de détecter le guide de soupape et de gérer les efforts au moment de l'introduction de celle-ci dans la culasse. Le préhenseur conçu permet d'effectuer une prise des soupapes en simultané dans les conditionnements, puis est apte à changer de configuration pour permettre l'introduction unitaire des soupapes et offrir ainsi une flexibilité produit, que ne possèdent pas les postes automatiques existants. Plusieurs robots de ce type peuvent travailler en simultané pour augmenter la performance du poste en temps de cycle. Dans ce cas, les robots et outils sont dupliqués, permettant d'augmenter le potentiel de capacité de production par un investissement progressif. L'ensemble de ces modules s'implante dans un espace réduit équivalent à un poste manuel, ce qui permet d'ajouter progressivement des modules automatiques sans perturber le procédé global et l'implantation de la ligne de fabrication.

Comme indiqué plus haut, de préférence, le moyen robotique selon l'invention est de type collaboratif, en étant muni de moyens de sécurité intégrés, notamment de moyens de sécurité dits sur contact inopiné. Avantageusement, il est muni de capteurs avec retour d'information sur chacun de ces axes de mobilité. Ce type de robot appartient à une nouvelle génération de robots, appelée parfois « safe » (sûr en français), car conçus de manière à pouvoir conduire des opérations en milieu humain sans dispositif de sécurité extérieur, grâce à leur sécurité intégrée, notamment par des capteurs appropriés : on n'a plus besoin d'avoir recours à des robots isolés, « mis en cage », pour protéger les opérateurs, on n'a plus besoin non plus, de fait, de regrouper les postes d'assemblage à opération manuelle dans une zone, et les robots dans une autre. Et l'intégration de capteurs sur chacun de leurs axes de mobilité, au-delà de leur finalité pour la sécurité des opérateurs, permet de leur faire réaliser des tâches avec un retour d'information sensitive très précis. Ce type de robot présente en outre l'avantage d'être généralement très compact, avec une taille proche de la taille humaine, ce qui les rend facilement implantables/intégrables sur la ligne de fabrication.

Le moyen robotique selon l'invention comprend un bras muni à l'une de ses extrémités d'une tête équipée d'au moins deux moyens de préhension pneumatique de composants , lesdits moyens étant mobiles par rapport à la tête entre deux positions, une position d'approvisionnement des composants et une position de montage des composants.

Les moyens de préhension selon l'invention sont aptes à pivoter autour d'un axe entre la position d'approvisionnement et la position de montage, notamment selon un angle de 90°, les moyens de préhension étant parallèles entre eux dans leurs positions d'approvisionnement, et étant coplanaires avec des orientations différentes dans leurs positions de montage.

De préférence, la tête est montée en rotation sur le bras. Le bras est lui-même monté mobile par rapport au corps du robot. On a ainsi une mobilité du bras pour s'approcher le la zone d'approvisionnement en composants disposés en rangées parallèles (rangées de soupapes), avec la tête venant s'orienter de façon appropriée, par exemple au-dessus de cette zone, avec ses moyens de préhension pneumatique tous orientés dans la même direction pour saisir les rangées de soupapes en une seule opération (par exemple 4 soupapes d'un coup pour chaque cylindre d'une culasse. Puis le bras se déplace vers la pièce (la culasse) disposée dans une autre zone, et les moyens de préhension pivotent par rapport à la tête pour se mettre en position de montage, chaque soupape étant introduite une à une avec une rotation de la tête par rapport à son bras.

Avantageusement, les moyens de préhension selon l'invention sont montés sur la tête de façon articulée, la tête présentant des évidements permettant leur escamotage partiel dans l'une de leurs positions, notamment dans la position de montage.

L'invention a également pour objet un procédé de mise en oeuvre du poste d'assemblage décrit plus haut, tel que le moyen robotique s'approvisionne en composants simultanément, puis vient les monter un à un sur la pièce par les moyens de préhension pneumatique.

De préférence, le procédé selon l'invention prévoit que le moyen robotique, entre l'approvisionnement en composants et leur montage sur la pièce, assure un traitement intermédiaire desdites pièces, notamment de type huilage.

L'invention a également pour objet une ligne de fabrication industrielle comprenant au moins un poste d'assemblage décrit plus haut, et qui comprend aussi des postes d'assemblage manuels ou semi-automatiques.

L'invention a également pour objet le procédé de mise en oeuvre de cette ligne de fabrication industrielle, où l'on remplace lesdits postes à fonctionnement manuel ou à fonctionnement semi-automatique dans la ligne par des postes à fonctionnement automatique de façon interchangeable, notamment selon la capacité de production visée.

Ce procédé de mise en oeuvre de la ligne de fabrication décompose de préférence l'assemblage en une série d'opérations élémentaires suivant une unité de temps prédéterminé, chaque opération étant réalisée par un module standardisé.

Cette unité de temps prédéterminée est de préférence comprise entre 10 secondes et 2 minutes, notamment de 30 secondes. Chaque opération peut être réalisée par une « brique » fonction, l'ensemble de ces « briques » composant une librairie de fonctions manuelles, semi-automatiques ou automatiques interchangeables. Ces « briques » peuvent être juxtaposées (en série) dans une station de travail pour composer une charge de travail de N x uₜ. L'organisation des briques peut également permettre de réaliser des opérations en parallèle (en temps masqué). Ainsi, l'organisation des briques en série et/ou en parallèle permet d'adapter la construction de chaque station de travail de cycle de la ligne qui est visé. De préférence, l'unité de temps uₜ prédéterminée est choisie comprise entre 10 secondes et 2 minutes, et peut être notamment de l'ordre de 30 secondes.

Cette ligne de fabrication industrielle peut être utilisée pour l'assemblage de pièces mécaniques, notamment pour l'assemblage d'organes appartenant à un groupe motopropulseur, par exemple le montage de soupapes dans une culasse de moteur thermique.

L'invention propose ainsi, avec cette ligne de fabrication modulable, une nouvelle façon de concevoir de façon modulaire l'assemblage de produits, en décomposant les postes d'assemblage en sous-ensembles simples, des modules standardisés et flexibles. Ces modules permettent de réaliser en manuel ou en automatique les différentes opérations d'assemblage. On constitue la ligne de fabrication par juxtaposition des différents modules, à façon, selon le type de produit à assembler et selon la capacité de production à atteindre. A chaque module correspond une opération élémentaire à effectuer.

Les modules standardisés d'une station d'assemblage opèrent de préférence successivement et/ou en parallèle : plusieurs opérations peuvent être menées en parallèle, pour un assemblage final par exemple, ce qui permet un gain de temps.

De préférence, le procédé selon l'invention utilise la ligne de production pour assembler des produits différents par une réorganisation et reprogrammation des modules standardisés.

L'invention a également pour objet un procédé de mise en oeuvre de la ligne selon la revendication 7, qui utilise la ligne de production pour assembler des produits différents par une réorganisation et reprogrammation des postes d'assemblage.

Le procédé de fonctionnement d'une ligne de fabrication industrielle selon l'invention comprend un poste décrit plus haut et au moins un poste avec un module à fonctionnement manuel et/ou semi-automatique, lesdits postes d'assemblage étant décomposés en modules standardisés, qui sont chacun à fonctionnement manuel ou à fonctionnement automatique ou à fonctionnement semi-automatique : on choisit le nombre relatif de modules manuels, semi-automatique et automatiques, qui sont interchangeables entre eux, selon la capacité de production visée.

L'invention est décrite plus en détail ci-après en référence aux figures relatives à un exemple de réalisation non limitatif se rapportant à un poste d'assemblage selon l'invention dans une ligne de fabrication, l'assemblage selon cet exemple concernant le montage des soupapes dans une culasse de moteur thermique :
- la figure 1 représente deux postes d'assemblage d'une ligne de fabrication selon l'état de l'art existant ;
- la figure 2 représente un outillage utilisé dans les postes d'assemblage de la figure 1 ;
- la figure 3 représente un poste d'assemblage automatique selon l'invention ;
- les figures 4a et 4b représentent une vue partielle du robot collaboratif du poste d'assemblage de la figure 3, dans deux positions différentes de ses préhenseurs ;
- la figure 5 représente un préhenseur du robot collaboratif des figures 4 dans ses deux positions ;
- les figures 6a et 6b représentent les opérations d'approvisionnement en soupapes par le robot collaboratif selon l'invention ;
- les figures 7a et 7b représentent une station de huilage des soupapes une fois approvisionnées par les préhenseurs :
- les figures 8a à 8d décrivent l'étape de montage des soupapes dans la culasse ;
- la figure 9 est une représentation graphique de la flexibilité d'une ligne de fabrication utilisant au moins un poste d'assemblage selon l'invention en fonction d'une demande d'augmentation de capacité de production.

Les références reprises d'une figure à l'autre désignent les mêmes composants, et les différents composants représentés ne sont pas nécessairement à l'échelle. Les figures restent extrêmement schématiques pour en faciliter la lecture.

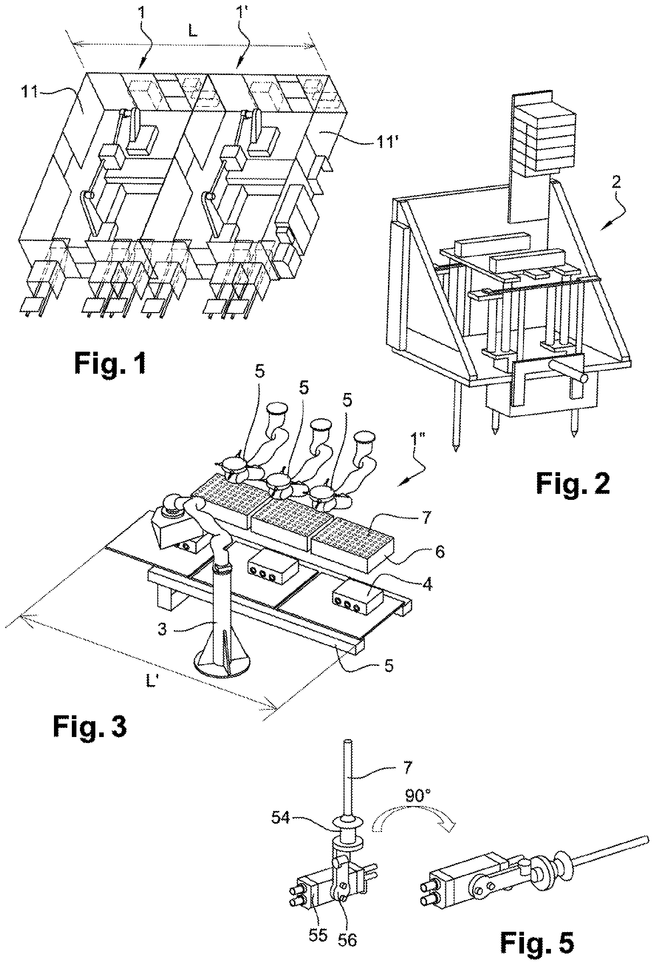

La figure 1 représente deux postes d'assemblage automatisés 1, 1' d'une ligne de fabrication selon l'état de l'art existant, qui utilisent des outillages automatisés 2 appelés ici effecteurs de montage dont un exemplaire est représenté en figure 2. Les postes 1,1' sont délimités par des parois 11,11' et présentent un encombrement significatif, ici, par exemple avec une largeur L de l'ensemble de plus de 10 mètres. Naturellement, pour augmenter les capacités, on doit ajouter des postes supplémentaires et agrandir d'autant la taille de la ligne dans son ensemble et donc réorganiser son implantation sur le site industriel en conséquence. Avec un poste d'assemblage 1,1' on peut viser le montage de 4 soupapes dans un moteur à 4 cylindres avec un volume de production de l'ordre de 640 000 moteurs par an. L'effecteur de montage 2 dispose d'une prise de référence mécanique, d'un entraxe fixe entre les soupapes, d'un angle d'introduction fixe des soupapes sur la culasse et d'un dispositif de recentrage. Il est inflexible au produit, c'est-à-dire qu'il ne peut pas s'adapter à, par exemple, un écartement de soupapes différent, ou à un nombre de soupapes différents à monter (pour un moteur de dimensions différentes, avec un nombre de cylindres différent, 3 ou 6 cylindres par exemple).

La figure 3 représente un poste d'assemblage 1" automatique selon l'invention, qui permet le montage de soupapes pour toute une gamme de moteurs (diesel, essence, 3 cylindres, 4 cylindres...), avec un volume de production variable de par exemple 200 000 à 640 000 moteurs par an. On effectue le montage des soupapes à l'aide de robots collaboratifs (notamment du type commercialisés par la société KUKA sous la dénomination KUKA IIWA). On utilise ici un robot collaboratif 3 dit de présentation de culasse 4, qui vient donc saisir les culasses une à une depuis une zone d'approvisionnement 5 pour les présenter dans la position appropriée à des robots collaboratifs, qui vont s'approvisionner en soupapes 7 de façon séquencée à la production, les soupapes étant pour ce faire regroupées dans des bacs 6 défilant sur un convoyeur (non représenté) au voisinage des robots 5. On note que ce poste 1", avec le robot 3 et les rois robots 5, présente une longueur L' d'au plus 2 mètres.

Les robots 5 sont aptes à détecter le guide de soupape et gérer les efforts au moment de l'introduction de celle-ci dans la culasse. Les robots 5 préhenseurs, dont le mode de fonctionnement sera détaillé avec les figures suivantes, sont conçus pour effectuer une prise des soupapes 7 en simultané dans les bacs de conditionnement 6, puis ils changent de configuration pour permettre l'introduction unitaire des soupapes 7 dans les culasses 4. Plusieurs robots 5 peuvent travailler en simultané pour augmenter la performance du poste en temps de cycle : ici on en a prévu trois, mais on peut n'en prévoir qu'un ou monter au-delà de trois. On vient dupliquer les robots et les outils quand on veut augmenter la cadence de production. Ce poste 1" vient remplacer les postes 1,1' existants avec un gain de compacité significatif.

De façon synthétique, le procédé de montage selon l'invention se déroule de la façon suivante : les robots 5 viennent saisir des soupapes 7, puis effectuent leur huilage (lubrification), puis viennent les monter une à une sur une culasse 4.

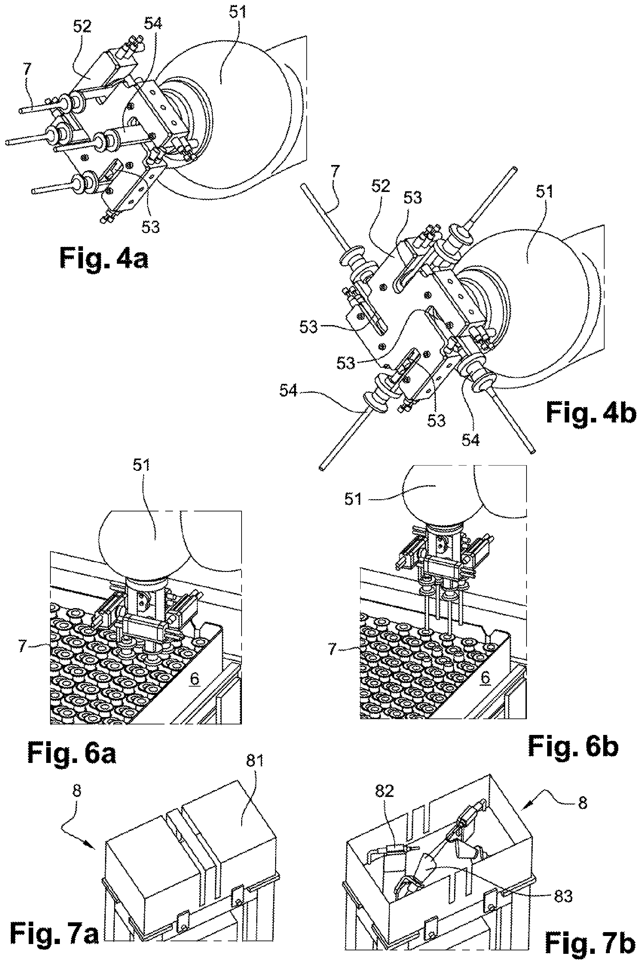

Les figures 4 à 8 décrivent en détails ces différentes étapes.

Tout d'abord, les figures 4a et 4b représentent l'extrémité d'un bras préhenseur 51 d'un robot 5, extrémité qui est munie d'une tête 52 qui est apte à pivoter sur ladite extrémité. Cette tête 52 présente une forme approximativement parallélépipédique, avec quatre évidements 53 depuis sa périphérie et sur toute son épaisseur. Ces évidements sont sous forme de fentes disposées à 90° les unes des autres, dans lesquelles sont montés sur des axes des ventouses pneumatiques 54.

La figure 5 représente le détail de ce montage, avec une soupape en position de préhension sur une ventouse 54, qui est articulée par une articulation mécanique 56 sur un axe 55 disposé dans l'évidement 53 de la tête 52. La ventouse peut ainsi basculer autour de son axe de 90° entre deux positions: sot elle est dans l'alignement de l'axe 55, soit elle est perpendiculaire à celui-ci, elle passe d'une position à une autre par un actionneur piloté non représenté.

Chaque robot 5 est donc équipé de quatre ventouses 54 de préhension de soupapes qui peuvent basculer d'une position à une autre par un /des modules/actionneurs de rotation de type pneumatique ou électrique, et qui sont aptes à saisir par aspiration la soupape par la tête de soupape depuis son bac de conditionnement 6. Le robot 5 est également équipé d'un bâti en aluminium qui relie les ventouses/ ensembles de préhension à l'interface robots.

Les figures 6a et 6b représentent l'étape de saisie par les ventouses 54 des soupapes 7 dans leurs bacs 6 : les ventouses 54 sont mises en position de préhension par des actionneurs pilotés, c'est-à-dire qu'elles sont toutes orientées à 90° par rapport à leurs axes 55 par l'articulation 56. Pour s'approvisionner, le robot se place au niveau des conditionnements 6 (figure 6a) puis saisit quatre soupapes 7 en simultané à l'aide des quatre ventouses 54 (figure 6b). La prise en simultané permet d'être performant en temps de cycle. L'entraxe entre soupapes 7 dans les conditionnements 6 est généralement toujours le même (pour tous les types de culasses et de soupapes). Les quatre ventouses pneumatiques 54 sont pilotées indépendamment les unes des autres. Les venturis permettant l'aspiration se situent à l'embase du robot 5 et son reliés par des faisceaux externes non représentés.

Comme représenté aux figures 7a et 7b, l'huilage des queues de soupapes 7 s'effectue ensuite au défilement sur une station d'huilage automatique 8 afin d'assurer leur lubrification ; les robots viennent déplacer les soupapes vers cette station. La vue de la figure 7b représente la station d'huilage en perspective cavalière vue de haut, sans le couvercle 81 (contrairement à la vue de la figure 7a), elle utilise une buse 82 qui va pulvériser des gouttelettes d'huile sur les soupapes toujours maintenues contre les ventouses 54 par aspiration. La station comporte aussi un cône de récupération 83 qui récupère l'huile en excès.

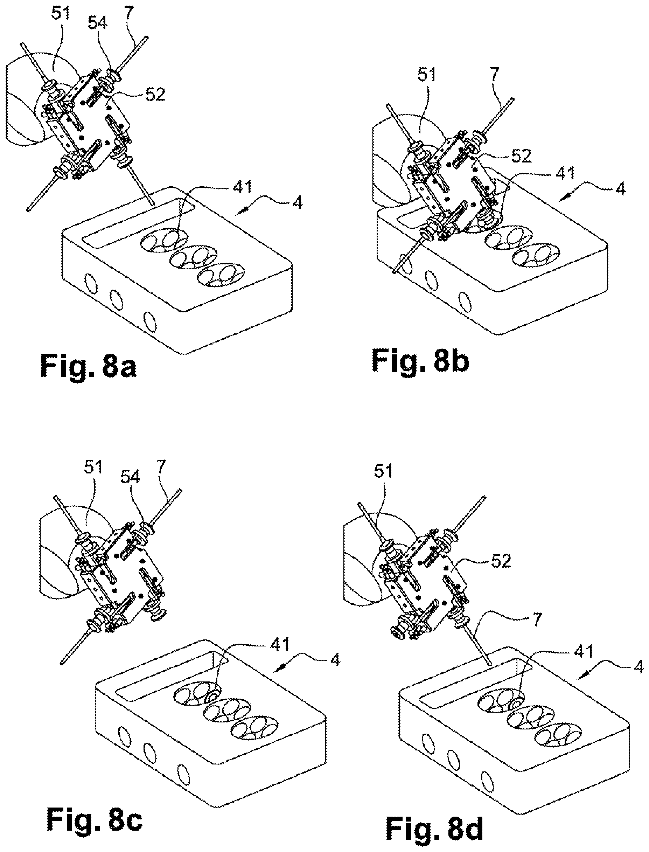

Comme représenté aux figures 8a à 8d, pour insérer ensuite les soupapes 7 dans la culasse 4 de manière unitaire, le robot 5 déplace à nouveau les soupapes, après leur huilage, vers la zone d'approvisionnement en culasses 4. Il change la configuration de ses ventouses préhenseur 54 avant d'effectuer l'introduction des soupapes : celles-ci basculent en position de montage par une rotation de 90° autour de leur articulation.

La figure 8a représente le bras du robot 5 à l'approche du plan où sont disposées les culasses 4, une fois les ventouses basculées en position de montage. Dans cette configuration, on voit que les queues de soupape se retrouvent coplanaires et que chaque queue de soupape se trouve orientée à 90° des deux queues de soupape qui lui adjacentes.

La figure 8b représente une étape suivante, où le bras du robot 5 s'est déplacé à la distance appropriée de la culasse à équiper de soupapes, et où la tête 52 vient introduire une des soupapes d'un cylindre 41 de la culasse 4 considérée.

La figure 8c représente l'étape suivante, où le bras éloigne la tête 52 de la culasse, pour permettre à la tête 52 de tourner de 90° par rapport au bras, de façon à présenter une seconde soupape au montage.

La figure 8d est analogue à la figure 8a, avec montage de la deuxième soupape 7 dans le cylindre 4.

On comprend que les différentes opérations sont poursuivies jusqu'à ce que les quatre soupapes soient montées dans la culasse.

Si on synthétise les étapes clé du cycle de montage des soupapes selon l'invention, on a :
- La culasse 4 arrive au poste d'assemblage
- Le(s) robot(s) 5 saisi(ssen)t à l'aide des ventouses préhenseur 54 les quatre soupapes 7 en simultané dans leur(s) conditionnement(s)
- Il(s) se déplace(nt) avec les soupapes 7 jusqu'au poste d'huilage 8
- Il(s) indexe(nt) les ventouses préhenseur 54 dans la station 8 ou l'huile est pulvérisée sur les queues de soupapes 7
- Il(s) se déplace(nt) jusqu'à la culasse 4 et changent la configuration des ventouses préhenseur 54
- Il(s) effectue l'introduction unitaire des quatre soupapes 7 dans les cylindres 41 de la culasse
- Il(s) retourne au(x) conditionnement(s)
- Il(s) effectue ce cycle jusqu'à introduction du bon nombre de soupapes 7 dans la culasse 4

Le cycle représenté ci-dessus est valable pour le montage de quatre soupapes. Cependant, le robot peut réaliser un cycle pour 1, 2 ou 3 soupapes, puisque les ventouses préhenseur 54 sont pilotées séparément. On peut utiliser la même tête équipée de quatre ventouses 54, mais en utilisant seulement certaines d'entre elles.

La dépose des soupapes 7 une à une dans la culasse 4 selon l'invention permet d'être complètement flexible au type de culasse, tant à l'entraxe entre les soupapes, qu'à l'inclinaison des logements notamment.

L'insertion des soupapes 7 est réalisée par le robot, et ne nécessite aucune prise de référence mécanique de l'outil sur la culasse 4, assurant ainsi une entière flexibilité au produit.

En effet, les robots collaboratifs, notamment ceux du type KUKA IIWA, permettent de détecter le trou du guide de soupapes 7 dans les cylindres 41, et de gérer l'introduction de la soupape dedans, uniquement par la gestion des retours d'informations des capteurs d'effort installés sur les sept axes des robots 5. On gère ainsi du même coup la disparité de position des trous des guides de la culasse par rapport à la position d'arrêt sur le convoyeur. Ces robots sont également capables de palper les conditionnements sur les voies d'approvisionnement pour identifier les dispersions relatives à la position du conditionnement dans le convoyeur d'approvisionnement.

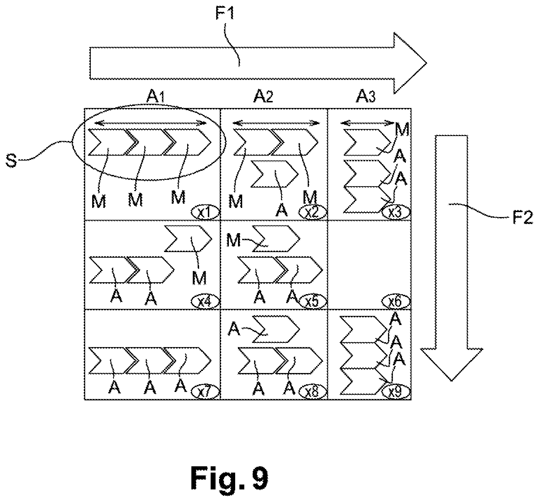

La figure 9 est une représentation graphique de la flexibilité d'une ligne de fabrication utilisant des postes d' assemblage selon l'invention en fonction d'une demande d'augmentation de capacité de production : pour une ligne de fabrication donnée, la flèche F1 indique un sens d'augmentation de l'investissement en outillage industriel, la flèche F2 indique un sens d'augmentation du degré d'automatisation de la ligne (M signifiant que l'opération est manuelle, et A que l'opération est automatisée). A1 représente un premier palier de production, de par exemple N produits par an , A2 un second palier de production, de par exemple 1,5 x N produits par an, et A3 un troisième palier de production, de par exemple 3 x N produits par an, avec une même station de travail S devant réaliser trois opérations élémentaires, qui peuvent être manuelles ou automatisées.

Sur les trois opérations schématisées, plus on a recours à des modules automatisés, plus la cadence de production peut être élevée, à investissement industriel constant. Dans ce cas, on peut choisir - de conserver en opérations manuelles, les stations pour lesquelles les briques automatiques seraient non rentables ; - de réaliser en semi-automatique opérations ne pouvant prétendre qu'à certaines briques automatiques rentables ; - de réaliser en tout automatique les stations de travail où toutes les briques automatiques sont rentables.

On comprend qu'avec ce type de conception de ligne, le temps d'industrialisation est réduit par la simplification des outillages et la standardisation des solutions. De plus, les briques élémentaires sont flexibles au regard des produits à faire, par une minimisation de la mécanique au profit de fonctionnalités de type programmations de logiciels. L'adaptation de l'outil de production au produit est donc conduite majoritairement par de la programmation, avec le cas échéant la simplification des outils permettant d'envisager aisément des solutions de changement d'outil sans reconception fondamentale du procédé de fabrication. Cette flexibilité permet de mieux charger les lignes de fabrication en les rendant capables de fabriquer plusieurs types de produit aisément, et d'être globalement moins sensibles aux variations de volume des ventes des produits fabriqués.

A chaque palier de volume de production, A1,A2,A3, l'investissement reste minimum par un taux d'automatisation modulable. On peut ainsi adapter la taille de l'équipe d'opérateurs au volume à produire, de façon linéaire pendant la montée en capacité, quand on commence à produire un nouveau produit. L'adaptation au volume linéaire est rendue possible par un procédé de fabrication qui minimise les déplacements parasites des opérateurs. Cette conception permet de minimiser de minimiser les frais fixes / frais variables dans la phase de montée en capacité de production.

Pour prendre l'exemple concret du montage des soupapes décrit précédemment, la première colonne du tableau correspond à un montage de 16 soupapes d'un moteur à 4 cylindres en 90 seconde, la deuxième colonne au même montage e, 60 secondes, et la troisième colonne un montage en 30 secondes : la cellule x1 du tableau de la figure correspond à l'organisation de la ligne avec trois postes de montage des soupapes entièrement manuels, avec un opérateur qui peut monter 16 soupapes en 90 secondes ; - la cellule x2 correspond à l'organisation avec un poste manuel et un poste entièrement automatique comme dans l'invention, où l'on peut monter 12 soupapes en manuel en 60 secondes et 4 soupapes en automatique en 30 secondes ; - la cellule x3 prévoit un poste manuel et deux postes automatiques selon l'invention, où l'on monte 4 soupapes en manuel en 30 secondes, et 12 soupapes en automatique en 30 secondes, - la cellule x4 prévoit un poste manuel et un poste automatique, permettant de monter 4 soupapes en manuel en 30 secondes et 12 soupapes en automatique en 60 secondes, - la cellule x5 prévoit également de monter 4 soupapes en manuel en 30 secondes et 12 soupapes en automatique en 60 secondes, - la cellule x7 utilise un poste automatique pour monter 16 soupapes en 90 secondes, - la cellule x8 utilise deux postes automatiques pour monter 16 soupapes en 60 secondes, et la cellule x9 utilise trois postes automatiques pour monter 16 soupapes en 30 secondes.

En conclusion, l'invention utilise des postes automatiques avec des robots collaboratifs très flexibles, très modulaires, ce qui permet de composer un procédé de fabrication à cadence variable par reconfiguration simplifiée, elle utilise des moyens élémentaires permettant une flexibilité au produit par de la programmation. Elle permet d'étaler mieux les investissements sur l'outil industriel, et de fabriquer plusieurs familles de produits sur une même ligne. Elle raccourcit le temps de développement, de mise en service et de reconfiguration de ligne. Elle permet de conserver le temps de cycle des procédés existants, et un fort gain en temps sur le temps d'industrialisation, du fait du recours à des « briques « standards. Le type de robot choisi permet de s'affranchir des contraintes des moyens automatisés précédemment utilisés sur ligne, à la fois en termes de flexibilité, en termes de dimensionnement et en termes d'utilisation conjointe avec des opérateurs sans risque pour ceux-ci, et sans avoir à prévoir des protections du robot du type carter ou cage.

Plus spécifiquement concernant le montage des soupapes par le robot conçu selon l'invention, on peut traiter tous les types de culasses simplement en changeant la programmation du robot. On peut faire travailler plusieurs robots en simultané pour s'adapter au temps de cycle. On peut investir en progressivement, et le cout d'investissement est moindre qu'avec les robots conventionnels. Leur encombrement réduit. Le poste ainsi équipé s'adapte aux différentes géométries des culasses et soupapes assemblées. Le temps de cycle peut être adapté à des cadences de 200 000 à 640 000 unités par an (selon le nombre de robots). On observe aussi un gain sur le temps d'industrialisation, du fait du recours à des » briques » standards. Cet outillage est utilisable pour tous les types de moteurs. Il peut également s'appliquer pour l'introduction d'autres pièces offrant les mêmes surfaces de prise qu'une soupape. Il suffit de modifier la partie outil de préhension (ventouse).

## Revendications

1. Poste d'assemblage (1") d'une ligne de fabrication industrielle pour monter une pluralité de composants (7) sur une pièce (4), ledit poste comprenant au moins un module à fonctionnement automatique équipé d'un moyen robotique (5) assurant la préhension simultanée de la pluralité des composants (7), puis le montage un à un desdits composants sur la pièce (4), le moyen robotique (5) comprenant un bras (51) muni à l'une de ses extrémités d'une tête (52) équipée d'au moins deux moyens de préhension pneumatique (54) de composants (7), lesdits moyens étant mobiles par rapport à la tête entre deux positions, une position d'approvisionnement des composants et une position de montage des composants, **caractérisé en ce que** les moyens de préhension (54) sont aptes à pivoter autour d'un axe entre la position d'approvisionnement et la position de montage, notamment selon un angle de 90°, les moyens de préhension étant parallèles entre eux dans leurs positions d'approvisionnement, et étant coplanaires avec des orientations différentes dans leurs positions de montage.

2. Poste d'assemblage (1") selon la revendication précédente, **caractérisé en ce que** le moyen robotique (5) est de type collaboratif, en étant muni de moyens de sécurité intégrés, notamment de moyens de sécurité dits sur contact inopiné.

3. Poste d'assemblage (1") selon l'une des revendications précédentes, **caractérisé en ce que** le module à fonctionnement automatique comprend des moyens de pilotage du moyen robotique sur 3, et notamment 6 degrés de liberté.

4. Poste d'assemblage (1") selon l'une des revendications précédentes, **caractérisé en ce que** la pièce (4) est une culasse de moteur, et **en ce que** les composants sont les soupapes (7) de ladite culasse.

5. Poste d'assemblage (1") selon l'une des revendications précédentes, **caractérisé en ce que** la tête (52) est montée en rotation sur le bras (51).

6. Poste d'assemblage (1") selon l'une des revendications précédentes, **caractérisé en ce que** les moyens de préhension (54) sont montés sur la tête (52) de façon articulée, la tête présentant des évidements (53) permettant leur escamotage partiel dans l'une de leurs positions, notamment la position de montage.

7. Ligne de fabrication industrielle comprenant au moins un poste d'assemblage (1") selon l'une des revendications précédentes, **caractérisée en ce qu'**elle comprend aussi des postes d'assemblage à modules manuels ou semi-automatiques.

8. Procédé de mise en oeuvre du poste d'assemblage (1") selon l'une des revendications 1 à 6, où le moyen robotique (5) s'approvisionne en composants (7) simultanément, puis vient les monter un à un sur la pièce par les moyens de préhension pneumatique (54).

9. Procédé selon la revendication précédente, **caractérisé en ce que** le moyen robotique (5), entre l'approvisionnement en composants (7) et leur montage sur la pièce (4), assure un traitement intermédiaire desdites pièces, notamment de type huilage.

10. Procédé de mise en oeuvre de la ligne selon la revendication 9, **caractérisé en ce qu'**il utilise la ligne de production pour assembler des produits différents par une réorganisation et reprogrammation des postes d'assemblage.

11. Procédé de fonctionnement d'une ligne de fabrication industrielle comprenant un poste d'assemblage (1'") selon l'une des revendications 1 à 6 et au moins un poste avec un module à fonctionnement manuel et/ou semi-automatique, lesdits postes d'assemblage étant décomposés en modules standardisés, qui sont chacun à fonctionnement manuel ou à fonctionnement automatique ou à fonctionnement semi-automatique et où l'on choisit le nombre relatif de modules manuels, semi-automatique et automatiques, qui sont interchangeables entre eux, selon la capacité de production visée.

## Patentansprüche

1. Montagestation (1") einer industriellen Fertigungsstraße zum Montieren einer Mehrzahl von Bauteilen (7) auf ein Teil (4), wobei die Station mindestens ein Modul mit automatischem Betrieb umfasst, das mit einem Robotermittel (5) ausgestattet ist, das das gleichzeitige Ergreifen der Mehrzahl von Bauteilen (7) sicherstellt, dann die Montage der Bauteile nacheinander auf das Teil (4), wobei das Robotermittel (5) einen Arm (51) umfasst, der an einem seiner Enden mit einem Kopf (52) versehen ist, der mit mindestens zwei pneumatischen Greifmitteln (54) von Bauteilen (7) ausgestattet ist, wobei die Mittel bezüglich des Kopfes zwischen zwei Positionen beweglich sind, einer Beschaffungsposition der Bauteile und einer Montageposition der Bauteile, **dadurch gekennzeichnet, dass** die Greifmittel (54) geeignet sind, um eine Achse zwischen der Beschaffungsposition und der Montageposition insbesondere um einen Winkel von 90° zu schwenken, wobei die Greifmittel zueinander in ihren Beschaffungspositionen parallel und in ihren Montagepositionen mit unterschiedlichen Ausrichtungen koplanar sind.

2. Montagestation (1") nach dem vorstehenden Anspruch, **dadurch gekennzeichnet, dass** das Robotermittel (5) vom zusammenwirkenden Typ ist, indem es mit integrierten Sicherheitsmitteln versehen ist, insbesondere mit sogenannten Sicherheitsmitteln bei unbeabsichtigtem Kontakt.

3. Montagestation (1") nach einem der vorstehenden Ansprüche, **dadurch gekennzeichnet, dass** das Modul mit automatischem Betrieb Mittel zum Steuern des Robotermittels auf 3 und insbesondere 6 Freiheitsgraden umfasst.

4. Montagestation (1") nach einem der vorstehenden Ansprüche, **dadurch gekennzeichnet, dass** das Teil (4) ein Motorzylinderkopf ist, und dass die Bauteile Ventile (7) des Zylinderkopfs sind.

5. Montagestation (1") nach einem der vorstehenden Ansprüche, **dadurch gekennzeichnet, dass** der Kopf (52) in Drehung auf dem Arm (51) montiert ist.

6. Montagestation (1") nach einem der vorstehenden Ansprüche, **dadurch gekennzeichnet, dass** die Greifmittel (54) auf angelenkte Art auf dem Kopf (52) montiert sind, wobei der Kopf Aussparungen (53) aufweist, die ihr teilweises Einfahren in einer ihrer Positionen, insbesondere in der Montageposition, erlauben.

7. Industrielle Fertigungsstraße, die mindestens einen Montageposten (1") nach einem der vorstehenden Ansprüche umfasst, **dadurch gekennzeichnet, dass** sie auch Montageposten mit manuellen oder halbautomatischen Modulen umfasst.

8. Verfahren zur Umsetzung des Montagepostens (1") nach einem der Ansprüche 1 bis 6, wobei das Robotermittel (5) Bauteile (7) gleichzeitig beschafft, und sie dann eines nach dem anderen auf das Teil durch die pneumatischen Greifmittel (54) montieren kommt.

9. Verfahren nach dem vorstehenden Anspruch, **dadurch gekennzeichnet, dass** das Robotermittel (5) zwischen dem Beschaffen von Bauteilen (7) und ihrer Montage auf das Teil (4) eine Zwischenbehandlung der Teile, insbesondere vom Typ Ölen, sicherstellt.

10. Verfahren zum Umsetzen der Straße nach Anspruch 9, **dadurch gekennzeichnet, dass** es die Produktionsstraße verwendet, um unterschiedliche Produkte durch eine Neuorganisation und Umprogrammierung der Montageposten zusammenzufügen.

11. Betriebsverfahren einer industriellen Fertigungsstraße, die einen Montageposten (1'") nach einem der Ansprüche 1 bis 6 und mindestens einen Posten mit einem Modul mit manuellem und/oder halbautomatischem Betrieb umfasst, wobei die Montageposten in Standardmodule aufgegliedert sind, die jeweils manuellen Betrieb oder automatischen Betrieb oder halbautomatischen Betrieb aufweisen, und wobei die relative Anzahl manueller, halbautomatischer und automatischer Module, die untereinander austauschbar sind, gemäß der gewünschten Produktionskapazität ausgewählt wird.

## Claims

1. An assembly station (1") of an industrial production line for mounting a plurality of components (7) on a part (4), said station including at least one automatic module equipped with a robot means (5) carrying out the simultaneous gripping of the plurality of components (7), then the mounting one by one of said components on the part (4), the robot means (5) including an arm (51) provided at one of its ends with a head (52) equipped with at least two pneumatic gripping means (54) of components (7), said means being movable with respect to the head between two positions, a supply provision of the components and a mounting position of the components, **characterized in that** the gripping means (54) are able to pivot about an axis between the supply position and the mounting position, in particular along an angle of 90°, the gripping means being parallel with each other in their supply positions, and being coplanar with different orientations in their mounting positions.

2. The assembly station (1") according to the preceding claim, **characterized in that** the robot means (5) is of the collaborative type, being provided with integrated security means, in particular security means designated as "on unexpected contact".

3. The assembly station (1") according to one of the preceding claims, **characterized in that** the automatic module includes driving means of the robot means over 3, and in particular 6 degrees of freedom.

4. The assembly station (1") according to one of the preceding claims, **characterized in that** the part (4) is an engine cylinder head, and **in that** the components are the valves (7) of said cylinder head.

5. The assembly station (1") according to one of the preceding claims, **characterized in that** the head (52) is mounted in rotation on the arm (51).

6. The assembly station (1") according to one of the preceding claims, **characterized in that** the gripping means (54) are mounted on the head (52) in an articulated manner, the head having recesses (53) permitting their partial retraction in one of their positions, in particular the mounting position.

7. An industrial production line including at least one assembly station (1") according to one of the preceding claims, **characterized in that** it also includes assembly stations with manual or semi-automatic modules.

8. A method for implementing the assembly station (1") according to one of Claims 1 to 6, in which the robot means (5) is supplied with components (7) simultaneously, then comes to mount them one by one on the part by the pneumatic gripping means (54).

9. The method according to the preceding claim, **characterized in that** the robot means (5), between the supplying with components (7) and their mounting on the part (4), carries out an intermediate treatment of the said parts, in particular of the oiling type.

10. The method for implementing the line according to Claim 9, **characterized in that** it uses the production line for assembling different products by a reorganisation and reprogramming of the assembly stations.

11. An operating method of an industrial production line including an assembly station (1"') according to one of Claims 1 to 6 and at least one station with a manual and/or semi-automatic operating module, said assembly stations being broken down into standardized modules, which are each with manual operation or automatic operation or semi-automatic operation and in which the relative number of manual, semi-automatic or automatic modules are selected, which are interchangeable with one another, according to the intended production capacity.
